# EUROPEAN PATENT APPLICATION

(11) **EP 4 714 915 A1**
(43) Date of publication of application: **25.03.2026**
(21) Application number: 24202012.1
(22) Date of filing: 23.09.2024
(51) Int. Cl.: C03C 3/064, C03C 3/091, C03C 8/16, C03C 10/00, C03C 17/00

(54) **ARTICLE WITH IMPROVED DEADFRONT-EFFECT AND APPLICATIONS THEREOF**

(71) Applicant: SCHOTT AG, 55122 Mainz (DE)
(72) Inventor: FRITZSCHE, Jan-Oliver, 55122 Mainz (DE); HOINKIS, Nina, 55122 Mainz (DE); HOVHANNISYAN, Martun, 55122 Mainz (DE); NOLL, Jana, 55122 Mainz (DE)
(74) Representative: Schott Corporate IP

(57) **Abstract**

The present invention relates to an article (1) with an improved deadfront-effect, comprising a deadfront-effect layer (3) which comprises a glass ceramic material with an Ilmenite solid solution as main crystal phase and a blue pigment. The invention also refers to methods of producing such article as well as suitable applications, especially for different home appliances or applications in vehicles.

## Description

The present invention relates to an article with an improved deadfront-effect. The application of a deadfront-effect is for example common in household devices, wherein for example elements of a display are only visible when the display is activated. In general terms, an article with a deadfront-effect includes a surface that disguises a display and/or other features from the viewer when the display is deactivated but allows the display and/or other features to be viewed when activated, normally when the display and/or other features emit light.

There are mainly four criteria which define the quality of the deadfront-effect or which are at least desired: First, the deadfront should disguise the underlying display or the like and therefore should have a limited transmission of light, especially when viewed from the side being opposite to the attached display. Second, when the display is deactivated, the article should have a neutral black appearance for the viewer. Third, when the display or other feature is activated, the original color of the emitted light should also be seen by the viewer. There should not be a noticeable color shift of the light emitted by the display and received by the viewer's eye. Fourth, the display should be clearly visible with sharp boarder lines, without and blur or haze or the like.

### Background

Articles with deadfront-effect are usually manufactured by applying a coating containing a clorored glass frit to at least one side of a mainly transparent substrate. Alternatively, organic coatings are commonly used as well. Colored glass frits or crystallizing glass frit compositions are known in the art. However, there are difficulties and drawbacks associated with state of the art:

For instance, JP 2001-89189 A discloses a ceramic color composition using (Fe,Mn)₂O₃ of a Bixbyite structure as a heat-resistant pigment powder. However, a ceramic color layer-attached glass plate using such a ceramic color composition had a problem such that the sinterability of the ceramic color layer is low, or the ceramic color layer looks whitish as observed through the glass plate from the side on which no ceramic color layer is fired.

US 5,710,081 A discloses and claims a particular black glass frit made by a process in which a metal-oxide-containing glass melt is contacted with reducing agent. In the process of this patent, metal-oxide forming glass raw materials (including iron oxide at a concentration of from 0.5 to 3.0 weight percent) and sulfur are melted at a temperature of from 1000°C to 1200°C in a reducing gas atmosphere to form a melt; and the melt is then quenched to form a frit. The glass made by the process of this invention is not strongly absorbing and does not create an intense color when applied as thin films (i.e., films less than 30 µm, preferably less than 20 µm, and more preferably less than 10 µm). The process described in US 5,710,081 A reduces iron oxide to iron sulfide in the melt in a reducing atmosphere, but the colored pigments which are formed in such process tend to precipitate out of the melt; and the frit that is formed from such glass melt thus has a relatively low concentration of the colored pigments and relatively poor optical properties.

JP 2003-183047 A describes a red colored glass which is afterwards converted into a red colored glass-ceramic. The inventor states that it is difficult to maintain the red color in the desired shade during the conversion of the glass into glass-ceramic. A special glass composition with at least one oxide of a bivalent metal and Bi₂O₃ is proposed. This sort of colored glass may be converted into a glass ceramic while maintaining its color shade.

Glass composition according to EP 0 482 535 B1 having coloring constituents based on FeO, selenium and CoO is only grey, but not black.

WO 2020/256887 A1 relates to Pb-free colored glass frits containing transition metal oxides such as Fe₂O₃, MnO₂, Cr₂O₃ and Co₃O₄.

US 2002/0197408 A1 relates to a process of manufacturing recyclable black enamel which contains at least zinc, in which process a glass forming material comprising at least bismuth, silicon, boron and manganese is melted at temperatures greater than 900°C.

DE 102008050263 A1 discloses a transparent, volume-colored glass-ceramic with improved display capabilities. DE 102021128736 A1 discloses a transparent glass-ceramic with a transmission filter attached by sputtering. Both provide high-end properties but require advanced production techniques. Especially in household or other consumer devices, simplified production methods are desired.

As discussed above, the known production methods are complicated or of the colored compositions disclosed by these patent publications differ in certain critical aspects from the compositions disclosed herein. In particular, ceramic color layer-attached glass plate using (Fe,Mn)₂O₃ - containing ceramic color composition shows sinterability issues (JP 2001-89189 A). Iron sulfide colored glass provides poor optical properties (US 5,710,081 A). FeO, Selenium and CoO colored glass or glasses are grey but not black (EP 0 482 535 B1).

To summarize, the state of the art does not present an article with a deadfront-effect which fulfills at least two of the criteria mentioned above in a satisfying and rational way.

### Description of the Invention

The invention provides an article with an improved deadfront-effect, in which at least a multitude of the criteria mentioned above are met in a superior way. The invention is specifically specified by the independent claims. Preferred embodiments are subject of the independent claims.

The invention provides an article with improved deadfront-effect, comprising a preferably transparent substrate and a deadfront-effect layer being attached to the substrate, the deadfront-effect layer comprising a glass-ceramic material comprising or consisting of a glass phase and a crystalline phase, wherein the crystalline phase comprises a main crystal phase, wherein the main crystal phase comprises an Ilmenite solid solution with crystallites of the idealized formula Fe₁₋ₓMₓTiO₃ or of formula (Fe₁₋ₓ,Mₓ)₂TiO₄ or (Fe₁₋ₓ,Mₓ)Ti₂O₅, wherein M is selected from the group consisting of Mn, Mg, Ni, Co, Zn, Cu, Cr and combinations of two or more thereof, wherein x is in a range of from 0 to 0.80, wherein the deadfront-effect layer comprises a blue color pigment.

The substrate is the base of the article. Usually the substrate is transparent, which means that it has a transmission of at least 80% in the visible spectrum of light. The deadfront-effect layer is attached to the substrate. This means that the deadfront-effect layer is in direct contact with the substrate. This of course comprises that the substrate might only partially be provided with the deadfront-effect layer. This can be usually achieved by a coating. In most applications, the substrate might be a glass or glass ceramics material.

The deadfront-effect layer comprises or consists of a glass-ceramic material, which comprises or consists of a glass phase and a crystalline phase. The crystal phase comprises a main crystal phase which comprises or consist of an Ilmenite solid solution with crystallites of the idealized formula Fe₂O₃-TiO₂ or of the formula (Fe₁₋ₓ,Mₓ)₂TiO₄ or (Fe₁₋ₓ,Mₓ)Ti₂O₅. M is selected from the group consisting of Mn, Mg, Ni, Co, Zn, Cu, Cr and combinations of two or more thereof, x is in a range of from 0 to 0.80.

According to the invention, the deadfront-effect layer comprises a blue color pigment. Usually, the blue color pigment is present and/or solved in the glass phase of the glass-ceramic material of the deadfront-effect layer, as well as the crystals of Ilmenite solid solution as main crystal phase. Main crystal phase means, as commonly known, the crystal phase which has the majority share of the overall different species of crystal phases present in the glass-ceramic material. The blue color pigment is a pigment, which has a blue color in the visible spectrum.

Advantageously, the deadfront-effect layer is an enamel coating layer. An enamel is known to be a material made by fusing powdered glass, here the powdered glass-ceramic material, to the substrate by firing, usually between 500 °C and 850 °C, advantageously between 600 °C and 750 °C. The powder melts, flows, and then hardens to a smooth, durable glass-ceramic coating.

Advantageously, the glass phase has a proportion of at least 70.0 wt.-% compared to the overall weight of the glass-ceramic material and the crystalline phase has a proportion of at least 0.1 wt.-%. Advantageous ranges for the crystalline phase are especially from 0.1 to 50 wt.-%, especially from 0.5 to 20 wt.-% or from 1 to 20 wt.-% or from 1 to 15 wt.-% or from 1 to 10 wt.-%. The crystalline phase advantageously comprises a main crystalline phase, which has a proportion of at least 50 wt% of the overall crystalline phase, which means when compared to the weight of the overall crystalline phase. Most advantageously, the glass phase has a proportion of at least 50 wt.-% or at least 20 wt.-%. Of course, the advantageous ranges of the glass phase correspond to the aforesaid advantageous ranges of the crystalline phase.

In another advantageous embodiment, the blue color pigment has the following L*a*b* color coordinates in CIELAB color space: L is in a range of from 28.0 to 40.0, a* is in a range of from -6.0 to 9.0 and b* in a range of from -10.0 to -45.0.

An advantageous set of CIELAB coordinates for the blue color pigment is the following set of parameters: L is in a range of from 28.0 to 40.0, a* is in a range of from 1.0 to 9.0 and b* in a range of from -30.0 to -45.0. This represents a mainly a pure blue color.

Another advantageous set of CIELAB coordinates for the blue color pigment is the following set of parameters: L is in a range of from 28.0 to 40.0, a* is in a range of from -6.0 to 0.0 and b* in a range of from -15.0 to -21.0. This represents in principle a mainly a turquoise color.

The CIELAB color coordinates of a pigment is known to be measured at a test color system containing only the referring pigment as color center.

The person skilled in the art is able to combine specimen of blue color pigments and their referring amounts to adapt the desired appearance of the named deadfront-effect layer comprising the Ilmenite solid-solution as main crystal phase.

As alternative or additional advantageous embodiment, the blue color pigment contains Co and/or Mn. More advantageously, the blue color pigment is selected from the group consisting of (Co)Al₂O₄ and/or Co(Al,Cr)₂O₃ and/or CoSnO₃ and/or YIn_{1-y}Mn_{y}O₃ including any combinations thereof.

The aforesaid Co or Mn represents the color center of the blue pigment. The inventors found out, that such blue pigments interact with the Ilmenite solid-solution in the glass ceramic layer in a synergistic way which thereby provides the aforesaid criterions for the deadfront-effect in an efficient way. The named blue color pigments are temperature stable and are suitable for the production processes described later in this description.

In another advantageous embodiment, the deadfront-effect layer comprises at least one further red color pigment and/or green color pigment and/or yellow color pigment.

Such additional color pigments can be used to fine tune the color coordinates of the deadfront-effect layer. This is predominantly provided by the interaction of the crystallites of the Ilmenite solid-solution and the blue color pigment. An adjustment of the color coordinates by additional color pigments can be applied as desired.

Advantageously, the color pigments are present in the glass ceramic material of the deadfront-effect layer in a range from 0.1 wt.-% to 15 wt.-%, preferably from 1.5 wt.-% to 10 wt.-% and/or the Ilmenite solid solution of the main crystal phase is present in a range from 0.5 wt.-% to 10 wt.-%.

These values refer to the overall weight of the glass ceramic material of the deadfront-effect layer and when referring to the pigments, the overall amount of color pigments. This usually means the sum of blue color pigments and, if present, the additional color pigments.

Advantageous contents of color pigments can be lower as well. Especially advantageous ranges for the content of blue color pigment are 1 wt.-% to 12 wt.-% or 1 wt.-% to 10 wt.-% or 2 wt.-% to 10 wt.-%.

Advantageous contents of Ilmenite solid solution is 1 wt.-% to 8 wt.-% or 1 wt.-% to 6 wt.-% or 1.5 wt.-% to 6 wt.-%. Again, this content refers to the overall content within the glass ceramic material of the deadfront-effect layer.

At this point it might be noticed that such small amounts of Ilmenite solid solution and color pigments provide an effective deadfront-effect. The Ilmenite crystal system very effectively interacts with light in the visible spectrum, allowing for small amounts of crystallites in order to provide the desired optical effect.

In another advantageous embodiment, the color pigments have a size d50 in the range from 0.1 µm to 1.2 µm and/or wherein the crystallites of the main crystalline phase have a main crystal size in the range from 0.05 µm to 0.8 µm. This of course especially holds true for the blue color pigments, but is applicable for the additional color pigments as well. As will be pointed out later as well, those values are advantageous to achieve advantageous clarity values. It is assumed that there is a balance of absorption by the Ilmenite crystallites and the color pigments, which have a size in which Mie scattering might occur.

The d50 values of the color pigments can be measured by known ways. The size of the Ilmenite crystals is measured from SEM images of the glass ceramic layer. In SEM images, the Ilmenite crystals can be seen as discrete objects, usually as elongated platelet like structures. When referring to main crystal size, the length of the largest diameter or elongation found in the SEM images is meant.

A most advantageous embodiment is represented by an article, wherein the difference of the spectral transmission at 700 nm and 450 nm is <50% or in the range from 1% to <50% and/or wherein the overall transmission is in the range from 0.5% to 50% for light having a wavelength of 400 - 750 nm when measured at a reference thickness of the deadfront-effect layer of 7 µm.

This criterion relates to a neutral black appearance and/or reduced color shift of the deadfront-effect layer. It is desired, that the spectral transmission curve shall be 'flat', which means without local maxima or minima in the visible spectrum. Typically, the glass ceramic systems as described herein have a higher transmission in the red than in the blue range of the visible spectrum of light. When the transmission T is measured at 450 nm and at 700 nm in the usual transmission % or T%, the difference of those values shall advantageously be <50%. For example if at 450 nm T is 3% and at 700 nm T is 40%, the difference is 37%.

When referring to overall transmission, the maximum transmission observed in the named spectral range is meant.

An especially advantageous embodiment is represented by an article with the following L*a*b* coordinate of the in CIELAB color space: L* is in a range of from 20.0 to 60.0, a* is in a range of from -4.0 to 10.0 and b* is in a range of from -3.0 to 4.0. The values are measured at a reference thickness of the deadfront-effect layer of 7 µm. This means that the measurement has to be performed at an article with a reference deadfront-effect layer with a thickness of 7 µm. This layer thickness of the reference system does not mean that a real article in the application must have this thickness. The reference system is used to perform the reference measurements as standard. The CLIELAB color coordinates are measured in remission, which means through the substrate of the article with the deadfront-effect layer on its back.

Advantageous ranges for L* are 20.0 to 40.0 or 25.0 to 40.0. Advantageous ranges for a* are -4.0 to 4.0 or -4 to 1.7 or -3 to 1.2. Advantageous ranges for b* are -3.0 to 4.0 or -2.0 to -3.0 or -1.5 to 3.0 or -1.0 to 2.9. Those advantageous ranges for any coordinate L* or a* or b* can be combined within the overall range described above and/or the advantageous ranges of the other coordinate or coordinates. This especially holds true for the b* coordinate.

The aforesaid color coordinates indicate a color neutral appearance of the article also when the light source is switched off to ensure a black dead-front appearance.

An advantageous embodiment is represented by an article with at least one of the following properties: clarity from 50% to 97%, and/or haze from 40% to 94%, and/or ratio haze/clarity >0.5, and/or optical density OD from ≥ 0.7 to < 2.5, especially from 0.8 to 2.4.

Those values or a selection thereof can of course be combined, especially to adapt the article to the referring use case.

The values refer to haze and clarity being measured from the side of the substrate with the deadfront-effect layer on the opposite side, whereas optical density OD is measure from the side of the deadfront-effect layer.

As commonly known, haze equals the percentage of regular rays that are diffracted greater than 2.5 degrees from normal in relation to the total transmitted light trough the measured sample e.g. plastic foil or enamel layers (according to ASTM D1003). This is sometimes called wide angle scattering and is a measure how blurry or cloudy a transparent material is. Clarity equals the percentage of regular rays that are diffracted at an angle of less than 2.5 degrees from normal. This is sometimes called narrow angle scattering. Those measurement can be done using known equipment such as a hazemeter (e.g. haze-gard of BYK-Gardner or Rhopoint ID), that is configured either specifically for a clarity reading, or once by dual detectors which simultaneously collect both wide and nar-row angle scattering. As the terms haze and clarity are known terms, a more detailed description might not be needed herein.

The ratio haze/clarity can advantageously be in the range from 0.51 to 2 or 0.55 to 1.7 or from 0.51 to 1.0. Most advantageously, this ratio is in the range from 0.50 to 0.97. When the aforesaid color coordinates are met and display or other feature is activated, the original color of the emitted light should also be seen by the viewer without an undesired color shift. At the same time, when the haze/clarity ratio is met, the display is clearly visible with sharp boarder lines. The presence of the color pigments might also contribute to the desired values for haze/clarity. As the pigment size of the color pigments ad described above is advantageously in the range of the wavelengths of the visible spectrum of light, it is assumed that Mie scattering might play a role in the optical effects provided by the color pigments. In particular, the color pigments most probably do not only affect the color shift, but also contribute to the haze and clarity values. It seems noticeable that although the contribution of the color pigments to the overall scattering regime might result in an increased haze, a relevant factor for the quality of the deadfront-effect is the relation of haze/clarity. Or with other words, the presence of the color pigments might also contribute to the desired values for haze/clarity.

This is surprising, as it could be assumed that very low haze values and very high clarity values should be desirable to provide a good deadfront-effect. An explanation it could be assumed that clarity is dependent on the distance of the observed object, here the display, to the article. Clarity deteriorates when the distance between the article, more precisely the deadfront-effect layer, and the object to be observed increases. As the display advantageously in mounted near the article, normally in a range of 0 mm to 2 mm at least for the reference systems, high values of clarity can be achieved. Another or additional explanation might be, that due to the advantageously low content of blue pigments, their scattering contribution might not have the dominant role in deteriorating good clarity values.

As further alternative or additional feature, the optical density OD is in a range from ≥ 0.7 to <2.5, advantageously the range from 0.8 to 2.4 for light having a wavelength of 400 nm to 750 nm. OD is measured from the side of the deadfront-effect layer. The optical density should not exceed the named value for providing a suitable deadfront-effect, because otherwise the visibility of the display would be hindered and/or reduced in an undesirable way.

OD is as commonly known an established measure to describe the transmission of light through a highly blocking optical filter (when the transmission is extremely small). OD is defined as the negative of the logarithm (base 10) of the transmission, where the transmission varies between 0 and 1, OD = - log 10 (T) or T = 10 -OD.

The optical parameters (such as the CIELAB parameters, the optical density, the transmission or the haze) are determined at a thickness of the deadfront-effect layer of 7 µm. However, this does not mean that the deadfront-effect layer necessarily has such a thickness. The deadfront-effect layer of the invention may have a thickness of 7 µm, but it does not have to. The thickness of 7 µm simply indicates the preferred reference thickness for optical measurements.

Advantageously the deadfront-effect layer of an article according to the invention might have a thickness from 1.0 µm to 30.0 µm.

As described above, a most advantageous method to apply a deadfront-effect layer to the substrate is to screen-print a paste containing the ingredients described herein to the substrate or at least areas thereof. Accordingly, in an advantageous embodiment the deadfront-effect layer is a screen-printed layer.

The substrate itself might advantageously consist of, at least in the area of the deadfront-effect layer, a glass or glass ceramic material or a polymer. 'In the area' means in this case the area, where a direct contact between the substrate and the deadfront-effect layer is present. This comprises sandwiched substrates as well as substrates, which contain different materials in different areas.

An especially advantageous embodiment can be achieved, when the crystallites of the Ilmenite solid solution M is Mn or Mg or combinations thereof. Or with other words, for the crystallites of the idealized formula Fe₁₋ₓMₓTiO₃ or of formula (Fe₁₋ₓ,Mₓ)₂TiO₄ or (Fe₁₋ₓ,Mₓ)Ti₂O₅, M is most advantageously selected from the group consisting of Mn and Mg including any combinations thereof.

According to the invention, a method for producing an aforesaid article with a deadfront-effect layer is provided as well. The method comprises the following steps:
a) Providing a starting glass,
b) Ceramming the starting glass by thermal treatment at a temperature of from 500°C to 1000°C advantageously for a duration of from 1 hour to 12 hours,
c) Coating a substrate with a paste comprising the glass-ceramic material and the blue pigment or a glass-ceramic frit containing the glass-ceramic material and the blue pigment as described above, wherein the paste further comprises an organic medium
d) Heat treating the coated substrate at a temperature of from 400°C to 1000°C (more advantageously 600 - 800 °C), advantageously for a duration of from 0.2 to 12 hours.

Aspects, examples and/or embodiments of the ceramming, frit preparation and the other production steps are described later in this description.

The invention also comprises beneficial applications or with other words the use of the article described herein. Accordingly, the invention also comprises the use of the aforesaid article in a household device, especially a cooktop and/or an oven and/or a cooker hood and/or a hob top and/or a refrigerator and/or a refrigerator door, a display device, a device in the interior of a vehicle, especially an automobile or an airplane or a train, or for the decoration of a windscreen.

Further advantageous applications could of course be possible as well and are comprised in the scope of the present invention.

In an aspect of the invention, the crystallizing glass and glass-ceramic compositions, during ceramization process, provide controllable (or, adjustable) residual glass and crystal phases. The crystal phases can include crystallites of an Ilmenite solid solution, for example referred to as a Fe₂O₃-TiO₂-MnO₂ system. This term ilmenite solid solution is not limited to the idealized formula Fe₁₋ₓMₓTiO₃, but also comprises the Ilmenite related components with other relation of (Fe, M) to Ti, for example Ulvöspinell or Ilvite((Fe,Mn)₂TiO₄) and/or Ferropseudobrookit ((Fe,Mn)Ti₂O₅). When used, the formula Fe₁₋ₓMₓTiO₃ also comprises those Ilmenite related species.

The softening temperature of such glass-ceramics can be changed in a broad range from 500 to 1000°C which displays good flowing behavior or high temperature stability at traditional decoration firing temperatures. Another aspect of the invention is that the crystal size of glass-ceramics can be adjusted in a broad range as well, as mentioned above in a range of from 0.05 µm to 5 µm or from 0.1 µm to 1 µm.

The crystal size (nm, µm) within the glass-ceramic might be adjusted to prepare the desired properties as described above.

The article and/or the deadfront-effect layer of the invention exhibit good chemical durability against acids and base chemicals.

The color of the glass-ceramic material contained in the deadfront-effect layer can be adjusted by adding transition metal ions in such a composition of such material to create an Ilmenite solid solution as the crystal system, represented by the formula Fe₁₋ₓMₓTiO₃ (M = Mn, Mg, Ni, Co, Zn, Cu, Cr, or a combination of two or more thereof) within the final color layer after crystallization of the produced glass frit. Optionally, the colored glass ceramic material contains coloring oxides such as Bi₂O₃, CeO₂, V₂O₅, MoO₃, WO₃, with an advantageous content of < 2 wt%, more advantageously < 1 wt%. Said oxides could also form colloids, which especially might be formed due to the melting under reducing conditions.

In the context of this description the term Ilmenite solid solution is used. This term is not limited to the idealized formula Fe₁₋ₓMₓTiO₃, but also comprises the Ilmenite related components with other relation of (Fe, M) to Ti, for example Ulvöspinell ((Fe,Mn)₂TiO₄) and/or Ferropseudobrookit ((Fe,Mn)Ti₂O₅). When used, the formula F₂₋ₓMₓTiO₃ also comprises those Ilmenit related species. Or with other words, the invention comprises an Ilmenite solid solution with crystallites of the idealized formula Fe₁₋ₓMₓTiO₃ or of formula (Fe₁₋ₓ,Mₓ)₂TiO₄ or (Fe₁₋ₓ,Mₓ)Ti₂O₅ formula (Fe₁₋ₓ,Mₓ)₂TiO₄ or (Fe₁₋ₓ,Mₓ)Ti₂O₅, wherein M is selected from the group consisting of Mn, Mg, Ni, Co, Zn, Cu, Cr and combinations of two or more thereof and wherein x is in a range of from 0 to 0.8.

A more detailed description for obtaining the deadfront-effect layer might be provided by the following processing steps:
1) Weighing the selected oxide powders (glass raw materials)
2) Melting under reducing atmosphere
3) Quenching the melt
4) Deadfront-effect layers can be produced via different following steps
   a. Crystallization of the quenched material at temperatures preferably from 500°C to 1000°C; in particular for a time between 0.5 and 12 hours. The heating rates are preferably in a range of from 2 to 10 K/min
   b. Milling of the crystallized glass to mean particle sizes d50 between 0.35 and 5 µm, advantageously between 0.5 and 3 µm, more advantageously between 1 and 1.5 µm
   c. Preparation of a color paste by adding screen printing medium and/or color pigments especially with particle sizes as described above, especially blue color pigments,
   d. Application via e.g. screen printing
   e. During burn in of the deadfront-effect layer at advantageous temperatures between 400 and 1000°C (more advantageously 600 - 800 °C) the crystallized glass melts but keeps its colored crystallites and as such leaves as result a colored decoration layer.

In such embodiments, the glass ceramic-material as used in the invention is obtained in step 4a. The glass-ceramic frit is obtained by the milling step 4b.

Step c. can be beneficially used to tune the color appearance of the layer. The optional addition of colored pigments comprises the addition of colored pigments, especially blue color pigments, which can induce a color shift and/or compensate a color shift of the materials and therewith the layer.

An alternative way to obtain a glass frit usable for the deadfront-effect layer is as follows:
a. Milling of the pristine glass to desired particle sizes d50
b. Preparation of a color paste by adding screen printing medium and/or color pigments especially with particle sizes d50 as mentioned above, especially blue color pigments
c. Application via e.g. screen printing
d. During burn in of the decoration layer at temperatures advantageously between 400 and 1000°C (more advantageously 600 - 8000 °C) the glass melts, crystallizes and leaves as result a deadfront-effect layer.

In any case, the crystal content is always kept < 100 mass %, especially <50%, in order to maintain the original glass properties and allow further processing of the heat-treated glass towards glass frit and layer production. The further processing in particular includes firing of glass frit at production.

The main advantages of Ilmenite - based glass-ceramic materials of the current invention can be summarized as follows.

Currently, there is no solution for a glass ceramic deadfront-effect layer with the properties described herein. Especially, the color coordinates and the relation haze/clarity in the range from >0.5 were up to now not achievable.

Furthermore, the deadfront-effect layer according to the invention does pass the 10 N or 20 N sclerometer test. The present invention provides a replacement for organic based color which requires more complicated production techniques and/or which has inferior mechanical and/or thermal properties.

Another aspect provided herein is a frit, which is partially crystallized, and which keeps its low softening temperature (in particular < 680°C).

A coating containing such a glass frit can be fired at advantageous production conditions (in particular at 400°C to 1000°C, in particular from 500°C to 1000°C, 600°C to 950°C,600°C to 800°C or >550°C to < 700°C.

The particle size d50 of the glass frit is especially advantageous >0.7 µm.

Suitable materials for the substrate comprise for example soda lime glass, borosilicate glass as well as glass ceramics and so on.

As described above, the glass-ceramic material comprises a glass phase in a proportion of advantageously at least 70.0 wt.-% and a crystalline phase in a proportion of at least 0.1 wt.-%, wherein the crystalline phase comprises a main crystal phase in a proportion of more than 50 wt.-% as compared to the total weight of the crystalline phase. In some embodiments, the main crystal phase comprises crystallites from the Fe₂O₃-TiO₂-MnO₂ system. As said before, metal colloids might be present as well as coloring oxides and/or colored pigments.

In some embodiments, the proportion of the glass phase is in a range of from 80.0 wt.-% to 99.9 wt.-%, for example from 82.5 wt.-% to 99.5 wt.-%, from 85.0 wt.-% to 99.0 wt.-%, from 87.5 wt.-% to 98.0 wt.-%, or from 90.0 wt.-% to 97.0 wt.-%. The proportion of the glass phase may in particular be at least 80.0 wt.-%, at least 82.5 wt.-%, at least 85.0 wt.-%, at least 87.5 wt.-%, or at least 90.0 wt.-%. The proportion of the glass phase may in particular be at most 99.9 wt.-%, at most 99.5 wt.-%, at most 99.0 wt.-%, at most 98.0 wt.-%, or at most 97.0 wt.-%.

In some embodiments, the proportion of the crystalline phase is in a range of from 0.1 wt.-% to 20.0 wt.-%, for example from 0.2 to 15.0 wt.-%, from 0.5 to 12.5 wt.-%, from 1.0 to 10.0 wt.-%, from at least 1.5 wt.-% to 8.0 wt.-%, or from 2.0 to 6.0 wt.-%. The proportion of the crystalline phase may in particular be at least 0.1 wt.-%, at least 0.2 wt.-%, at least 0.5 wt.-%, at least 1.0 wt.-%, at least 1.5 wt.-%, or at least 2.0 wt.-%. The proportion of the crystalline phase may in particular be at most 20.0 wt.-%, at most 15.0 wt.-%, at most 12.5 wt.-%, at most 10.0 wt.-%, at most 8.0 wt.-%, or at most 6.0 wt.-%.

The proportion of the main crystal phase is more than 50 wt.-%, in particular at least 60 wt.-%, at least 70 wt.-%, at least 80 wt.-%, at least 90 wt.-%, at least 95 wt.-%, at least 99 wt.-%, at least 99.9 wt.-% or even 100 wt.-% as compared to the total weight of the crystalline phase. In some embodiments the crystalline phase may consist of the main crystal phase. Thus, the main crystal phase may be the only crystal phase.

In some embodiments, the main crystal phase comprises or consists of crystallites from the Fe₂O₃-TiO₂-MnO₂ system. In some embodiments, the main crystal phase comprises or consists of (Fe,Mn)TiO₃ crystallites or (Fe,Mn)TiO₄ crystallites or (Fe₁₋ₓ,Mₓ)Ti₂O₅ or mixtures thereof.

In some embodiments, the main crystal phase comprises or consists of crystallites of the formula Fe₁₋ₓMₓTiO₃, wherein M is selected from the group consisting of Mn, Mg, Ni, Co, Zn, Cu, Cr and combinations of two or more thereof. Preferably, M is selected from the group consisting of Mn, Mg and combinations thereof. Particularly preferred, M is Mn. In some embodiments, x is in a range of from 0 to 0.80. Preferably, x is >0. The component M is advantageously used to adjust the color of the glass-ceramic material. It was observed that for example the inclusion of Mn and/or Mg results in a deep black color impression. The overall named components M can contribute in a similar way and/or also might provide a color shift compared to the pure Ilmenite crystal phase. It is also possible to add metal colloids, for example Bi or W, in order to tune the color appearance.

When referring to crystal sizes, the average of the main diameter obtained from measuring the dimensions of the crystallites from an image obtained from SEM (scanning electron microscope) is meant. Therefore, the crystallites visible in the image are analyzed using image software. The maximum expansion of the crystallites is interpreted as individual main diameter, then the arithmetic mean diameter is calculated from the sum of individual main diameters.

In some embodiments, the average crystal size of the crystallites is in a range of from 0.01 to 5.0 µm, for example from 0.02 to 4.0 µm, from 0.05 to 3.0 µm, from 0.10 to 2.0 µm, from 0.15 to 1.5 µm, from 0.20 to 1.0 µm, or from 0.25 to 0.75 µm. The average crystal size of the crystallites may for example be at least 0.01 µm, at least 0.02 µm, at least 0.05 µm, at least 0.10 µm, at least 0.15 µm, at least 0.20 µm, or at least 0.25 µm. The average crystal size of the crystallites may for example be at most 5.0 µm, at most 4.0 µm, at most 3.0 µm, at most 2.0 µm, at most 1.5 µm, at most 1.0 µm, or at most 0.75 µm. As described above, the crystallite size is determined by the analysis of SEM images.

In some embodiments, the starting glass and/or the glass ceramic-material of the present invention comprises TiO₂ in a proportion of 0.03 to 32 wt.-%, for example from 0.5 to 15 wt.-%, from 1.0 to 12 wt.-% or from 2.0 to 10 wt.-%. The proportion of TiO₂ may in particular be at least 0.03 wt.-%, at least 0.5 wt.-%, at least 1.0 wt.-%, or at least 2.0 wt.-%. The proportion of TiO₂ may in particular be at most 32 wt.-%, at most 15 wt.-%, at most 12 wt.-%, or at most 10 wt.-%.

In some embodiments, the starting glass and/or the glass ceramic-material of the present invention comprises Fe₂O₃ in a proportion of 0.07 to 44 wt.-%, for example from 0.5 to 20 wt.-%, from 1.0 to 15 wt.-% or from 2.0 to 12 wt.-%. The proportion of Fe₂O₃ may in particular be at least 0.07 wt.-%, at least 0.5 wt.-%, at least 1.0 wt.-%, or at least 2.0 wt.-%. The proportion of Fe₂O₃ may in particular be at most 44 wt.-%, at most 20 wt.-%, at most 15 wt.-%, or at most 12 wt.-%.

In some embodiments, the starting glass and/or the glass ceramic-material of the present invention comprises MnO₂ in a proportion of 0.03 to 25 wt.-%, for example from 0.5 to 15 wt.-%, from 1.0 to 10 wt.-%, or from 1.5 to 7.5 wt.-%. The proportion of MnO₂ may in particular be at least 0.03 wt.-%, at least 0.5 wt.-%, at least 1.0 wt.-%, or at least 2.0 wt.-%. The proportion of MnO₂ may in particular be at most 25 wt.-%, at most 15 wt.-%, at most 10 wt.-%, or at most 7.5 wt.-%.

In some embodiments, the starting glass and/or the glass ceramic-material of the present invention comprises the following components in the indicated amounts (in % by weight):

| **Component** | **Proportion (%by weight)** |
|---|---|
| SiO₂ | 1-70 |
| B₂O₃ | 0.4-35 |
| Al₂O₃ | 0.03-20 |
| Bi₂O₃ | 0-20 |
| P₂O₅ | 0-10 |
| Li₂O | 0-30 |
| Na₂O | 0-30 |
| K₂O | 0-30 |
| MgO | 0-25 |
| CaO | 0-25 |
| SrO | 0-25 |
| ZnO | 0-30 |
| TiO₂ | 0.03-32 |
| ZrO₂ | 0-10 |
| MnO₂ | 0.03-25 |
| Fe₂O₃ | 0.07-44 |
| SnO₂ | 0-2 |
| F | 0-2 |
| Reducing Agent | >0-2 |
| Sum RO | 0-25 |
| Sum R₂O | 0-30 |

The term RO indicates the alkaline earth metal oxides MgO, CaO, SrO, BaO. The term R₂O indicates the alkali metal oxides Li₂O, Na₂O, K₂O.

In some embodiments, the starting glass and/or the glass ceramic-material of the present invention comprises the following components in the indicated amounts (in % by weight):

| **Component** | **Proportion (% by weight)** |
|---|---|
| SiO₂ | 20-65 |
| B₂O₃ | 5-25 |
| Al₂O₃ | 0.5-15 |
| Bi₂O₃ | 0-20 |
| P₂O₅ | 0-5 |
| Li₂O | 0-10 |
| Na₂O | 0-15 |
| K₂O | 0-15 |
| MgO | 0-5 |
| CaO | 0-5 |
| SrO | 0-5 |
| ZnO | 0-25 |
| TiO₂ | 0.5-15 |
| ZrO₂ | 0-5 |
| MnO₂ | 0.5-15 |
| Fe₂O₃ | 0.5-20 |
| SnO₂ | 0-1 |
| F | 0-1 |
| Reducing Agent | 0.5-1.5 |
| Sum RO | 0-10 |
| Sum R₂O | 0.5-20 |

In some embodiments, the starting glass and/or the glass ceramic-material of the present invention comprises the following components in the indicated amounts (in % by weight):

| **Component** | **Proportion (% by weight)** |
|---|---|
| SiO₂ | 25-60 |
| B₂O₃ | 10-20 |
| Al₂O₃ | 1-10 |
| Bi₂O₃ | 0-20 |
| P₂O₅ | 0-2 |
| Li₂O | 0-5 |
| Na₂O | 0-10 |
| K₂O | 0-10 |
| MgO | 0-2 |
| CaO | 0-2 |
| SrO | 0-2 |
| ZnO | 0-20 |
| TiO₂ | 1-12 |
| ZrO₂ | 0-2 |
| MnO₂ | 1-10 |
| Fe₂O₃ | 1-16 |
| SnO₂ | 0-1 |
| F | 0-1 |
| Reducing Agent | 0.5-1.5 |
| Sum RO | 0-5 |
| Sum R₂O | 1-15 |

The glass-ceramic material of the invention is obtainable by ceramization of suitable starting glasses. The composition of the starting glasses is not substantially changed by the ceramization. Therefore, the starting glasses may have substantially the same compositions indicated above with respect to the glass-ceramics. In one aspect, the present invention relates to respective starting glasses.

As the glass-ceramic materials of the present invention might have a high proportion of glass phase, properties such as density, glass transition temperature Tg, softening temperature EW (temperature at 10^{7.6} dPas), and coefficient of thermal expansion (CTE, 20-300 °C) are essentially the same in the glass-ceramic materials and in the starting glasses. In some embodiments, the starting glasses and/or the glass-ceramic materials have a density in the range of from 2.0 to 4.0 g/cm³, for example from 2.2 to 3.5 g/cm³. In some embodiments, the starting glasses and/or the glass-ceramic materials have a glass transition temperature Tg in a range of from 400°C to 600°C, for example from 450°C to 550°C. In some embodiments, the starting glasses and/or the glass-ceramic materials have a softening temperature EW in a range of from 450°C to 650°C, for example from 500°C to 600°C, such as from 500°C to 560°C or from 560°C to 600°C. In particular, the softening temperature EW may be at most 650°C, at most 600°C, or at most 560°C. In some embodiments, the starting glasses and/or the glass-ceramic materials have a CTE (20°C; 300°C) in a range of from 4.0 to 9.0 ppm/K, for example from 4.5 to 8.0 ppm/K.

In one aspect, the glass-ceramic frit comprising or consisting of grains of glass-ceramic material, in particular comprising or consisting of grains of the glass-ceramic material of the present invention. A glass-ceramic frit is in particular a glass-ceramic material that is present in powdered form. In some embodiments, the particle size d50 of the grains is in a range of from 0.10 to 10 µm, for example from 0.20 to 7.5 µm, from 0.35 to 5.0 µm, from 0.50 to 3.0 µm, or from 1.0 to 1.5 µm. The particle size d50 of the grains may for example be at least 0.10 µm, at least 0.20 µm, at least 0.35 µm, at least 0.50 µm, or at least 1.0 µm. The particle size d50 of the grains may for example be at most 10 µm, at most 7.5 µm, at most 5.0 µm, at most 3.0 µm or at most 1.5 µm.

When referring to d50 as particle size, the term is commonly known in particle size distribution measurement and need no further explanation herein.

In one aspect, the present description relates to a paste comprising a glass-ceramic frit (in particular the glass-ceramic frit of the present invention) and an organic medium. The organic medium may in particular comprise or consist of one or more glycol ethers, in particular 2-(2-butox-yethoxy)ethanol and/or 2-butoxyethanol. The organic medium may for example comprise or consist of 50-75 Vol.-% 2-(2-butoxyethoxy)ethanol and 20-30 Vol.-% 2-butoxyethanol.

The viscosity of the paste is adjusted as required.

As described above, it is also foreseen to add colored pigments to the frit and/or the paste and/or the raw material itself, which can induce a color shift and/or compensate a color shift of the materials and therewith the layer. The colored pigments might especially have a size d50 from 0.1 µm to 1.2 µm.

In some embodiments, the weight ratio of the glass-ceramic frit to the organic medium in the paste is in a range of from 10:10 to 10:1, for example from 10:8 to 10:2 or from 10:6 to 10:3.

In one aspect, the description relates to a layer composite comprising or consisting of a glass or glass-ceramic substrate layer and an enamel coating layer as deadfront-effect layer. In some embodiments, the enamel coating layer comprises or consists of or is obtainable from a paste comprising a glass-ceramic material (in particular the glass-ceramic material of the present invention) and/or a glass-ceramic frit (in particular the glass-ceramic frit of the present invention), wherein the paste further comprises an organic medium. In particular, the enamel coating layer comprises or consists of or is obtainable from the paste of the present invention.

In some embodiments, the substrate comprises or consists of a soda lime glass (in particular a float soda lime glass), or a borosilicate glass (in particular a Borofloat^{®} glass). The thickness of the substrate may for example be in a range of from 0.3 mm to 20 mm, in particular from 0.5 to 15 mm, from 1.0 to 10 mm, or from 2.0 to 8.0 mm. The substrate may for example be a composite glass comprising or consisting of two glass panes that are connected by a polymeric interlayer, in particular a PVB (polyvinyl butyral) interlayer. The substrate may for example be a windscreen, in particular a windscreen having two glass panes with a thickness of 2.1 mm each and a PVB interlayer having a thickness of 0.76 mm.

In some embodiments, the enamel coating layer is obtainable by coating the substrate with the paste (for example via a screen-printing method) and subsequent firing of the coated substrate. The firing may in particular comprise temperatures in a range of from 400°C to 1000°C, in particular from 500°C to 1000°C, 600°C to 950°C, 600°C to 800°C or >550°C to < 700°C.

In some embodiments, the thickness of the deadfront-effect layer is in a range of from 0.1 to 30 µm, for example from 0.5 to 25 µm, from 1.0 to 15 µm , from 2.0 to 12 µm, from 5.0 to 10 µm, or from 6.0 to 8.0 µm. The thickness of the deadfront-effect layer may for example be at least 0.1 µm, at least 0.5 µm, at least 1.0 µm, at least 2.0 µm, or at least 5.0 µm. The thickness of the deadfront-effect layer may for example be at most 30 µm, at most 25 µm, at most 15 µm, at most 12 µm, at most 10 µm, or at most 8.0 µm.

As described above, the glass-ceramic material, the glass-ceramic frit, the article and/or the deadfront-effect layer is characterized by a particular advantageous color impression. The color impression can be determined with the CIELAB color space according to the knowledge of the skilled person, in particular under illumination with illuminant D65, an observation angle of 10°, and a thickness of 7 µm. The thickness may in particular be the thickness of the enamel coating layer. The L* value, the a* value and the b* value of the CIELAB color space may be determined according to the knowledge of the skilled person, in particular using KONICA MINOLTA spectrophotometer CM-700d with the enamel coating layer facing downwards.

As said before, the L* coordinate may in particular be in a range of from 20.0 to 60.0, from 20.0 to 40.0 or from 25.0 to 40.0.

The a* coordinate may in particular be in a range of from -4.0 to 10, for example from -4.0 to 4.0, from -4.0 to 1.7, or from -3.0 to 1.2, especially from -3 to 1.0.

The b* coordinate may in particular be in a range of from -3.0 to 4.0, from -3.0 to 3.0 or from -2.0 to 3.0, for example from -1.0 to 2.9.

The gloss can be measured from the side of the coating, or from the 'viewer's side', which is from the side of the substrate and therewith through the substrate. In this description, when referring to gloss values, the referring measurements are from the side of the coating.

In advantageous embodiments, the gloss at 60° is in a range of from 15 GU to 80 GU, in particular from 20 GU to 70 GU. The gloss at 60° may be determined according to the knowledge of the skilled person, in particular by RHOPOINT glossmeter according to the known established measurements. The gloss is indicated in "gloss units" (GU).

Embodiments according to the invention enable the deafront-effect layer to pass a sclerometer test at a force of 10 N, in particular at a thickness of the layer in a range of from 5 to 10 µm, such as from 6 to 8 µm, in particular 7 µm.

In some embodiments, the transmission of light having a wavelength in a range of from 380 to 740 nm is less than 50% when measured at a reference thickness of the enamel coating layer of 7 µm.

For example, the transmission is dependent on the thickness of the enamel coating layer. Therefore, it is reasonable to provide a reference thickness. For example, the transmission may be 1% at a thickness of a particular enamel coating layer of 7 µm. Nevertheless, the actual thickness of the enamel coating layer of the layer composite of the invention may be 10 µm. Thus, the invention for example also includes layer composites having an enamel coating layer with a thickness of 10 µm, wherein the transmission is 1% at a reference thickness of the enamel coating layer of 7 µm.

For preparing a glass-ceramic frit as described above, the following steps are usually applied:
a) Providing a starting glass advantageously,
b) Ceramming the starting glass by thermal treatment, in particular at a temperature of from 500°C to 1000°C for a duration of from 1 hour to 12 hours.
c) Grinding the resulting glass ceramics and adding a blue color pigment

The step of providing a starting glass may in particular comprise melting glass raw materials under reducing conditions (in particular reducing atmosphere) and/or quenching the melt. Quenching may in particular comprise fast roller quenching, water or air quenching methods, or combinations of two or more thereof.

In some embodiments, the ceramming temperature is in a range of from 500°C to 1000°C, in particular from 500°C to 950°C, for example from 525°C to 900°C.

In some embodiments, the ceramming time (duration) is in a range of from 0.5 to 12 hours or from 1 to 12 hours, for example from 1.5 to 7.5 hours, or from 2 to 6 hours.

In particular the method of producing a glass-ceramic frit (in particular the glass-ceramic frit of the present description) further comprises the step of milling the glass-ceramic material. The milling step may in particular be done such that the grains have a particle size d50 in a range of from 0.10 to 10 µm, for example from 0.20 to 7.5 µm, from 0.35 to 5.0 µm, from 0.50 to 3.0 µm, or from 1.0 to 1.5 µm.

The milling can be performed for example in ball mills. As described above, the blue color pigment can be added to the milled glass ceramic material or alternatively within the starting glass, for example as component of the starting glass.

In one aspect, the present description relates to a method for producing a paste comprising a glass-ceramic frit (in particular the glass-ceramic frit of the present invention) and an organic medium. The organic medium may in particular comprise or consist of one or more glycol ethers, in particular 2-(2-butoxyethoxy)ethanol and/or 2-butoxyethanol. The organic medium may for example comprise or consist of 50-75% 2-(2-butoxyethoxy)ethanol and 20-30% 2-butoxyethanol.

The viscosity of the paste can be adjusted for the application needs.

In some embodiments, the weight ratio of the glass-ceramic frit to the organic medium in the paste is in a range of from 10:10 to 10:1, for example from 10:8 to 10:2 or from 10:6 to 10:3.

The method for preparing the paste may in particular comprise the step of mixing the glass-ceramic frit and the organic medium.

In one aspect, the present description relates to a method for producing an article with the deadfront-effect layer. Such represents in principle a layer composite, the method comprising the following steps:
a) Coating a glass or glass-ceramic substrate with a paste comprising a glass-ceramic material containing a blue color pigment (in particular the glass-ceramic material of the present description) and/or a glass-ceramic frit containing a blue color pigment (in particular the glass-ceramic frit of the present description), wherein the paste further comprises an organic medium,
b) Heat treating (firing) the coated substrate, in particular at a temperature of from 600°C to 800°C and/or for a duration of from 0.5 to 12 hours.

The heat treatment may also be referred to as firing.

The coating step may in particular include screen printing. The screen mesh size may for example be at least 77 and/or at most 77, in particular 77-55T.

In some embodiments, the firing temperature, also referred to as 'burn in',is in a range of from 400°C to 1000°C, for example from 600°C to 800°C, from 650°C to 950°C, from 650°C to 850°C, or from 650°C to 750°C. The firing temperature may in particular be at least 400°C, at least 500°C, at least 600°C or at least 650°C. The firing temperature may in particular be at most 1000°C, at most 950°C, at most 850°C, at most 800°C, or at most 750°C.

In some embodiments, the firing time (duration) is in a range of from 0.5 to 12 hours, for example from 1 to 9 hours or from 2 to 6 hours.

As described above, the organic medium may in particular comprise or consist of one or more glycol ethers, in particular 2-(2-butoxyethoxy)ethanol and/or 2-butoxyethanol. The organic medium may for example comprise or consist of 50-75% 2-(2-butoxyethoxy)ethanol and 20-30% 2-butoxyethanol.

In some embodiments, the weight ratio of the glass-ceramic frit to the organic medium in the paste is in a range of from 10:10 to 10:1, for example from 10:8 to 10:2 or from 10:6 to 10:3.

In one aspect, the present invention relates to the use of the glass-ceramic material, the glass-ceramic frit and/or the layer composites of the present invention, in particular in home appliance or automotive applications, in particular the decoration of a windscreen.

### Examples

The invention is further illustrated by way of the following examples.

**Table 1: Starting glass compositions**

| **Oxide, wt%** | **Example No** | |
|---|---|---|
| | **Glass1** | **Glass2** |
| Al₂O₃ | 2.9 | 2.2 |
| BaO | | |
| SrO | | |
| B₂O₃ | 18.4 | 14.2 |
| Bi₂O₃ | | |
| Cr₂O₃ | | |
| F | | |
| Fe₂O₃ | 7.0 | 15.7 |
| K₂O | 6.7 | 5.2 |
| Li₂O | 1.2 | 0.9 |
| MnO₂ | 3.6 | 8.1 |
| Na₂O | 4.9 | 3.8 |
| SiO₂ | 49.0 | 37.6 |
| SnO₂ | | |
| TiO₂ | 5.1 | 11.3 |
| V₂O₅ | 0.0 | 0.0 |
| Reducing Agent | 1.1 | 1.0 |
| Sum | 100.00 | 100.00 |

| **Glass properties** | | |
|---|---|---|
| Tg, °C | 491 | 483 |
| Density , g/cm3 | 2.482 | 2.82 |
| CTE, ppm/K | 7.51 | 8.05 |

Mixed raw batch compositions were melted at > 1500°C; < 1650°C for about 30 - 120 min under reducing atmosphere, followed by fast cooling of the melt using fast roller quenching, water or air quenching methods. The resulting glass ribbons were then conducted to a ceramization at a ceramming temperature in the range of from 500°C to 850°C.

Glass-ceramic material of the invention was produced from different starting glass compositions and using different ceramming profiles. The different ceramming profiles differed with respect to the ceramming temperature and/or with respect to the ceramming time. Table 1 provides an overview of especially advantageous starting glasses.

The following Table 2 shows samples of properties of the material of the deadfront effect layer as well as properties of the article according to the invention. The examples of embodiments are indicated with 'Ex'.

The examples according to the invention all comprise the Ilmenite solid solution as main crystal phase and said blue pigment. The L* a* b* coordinates are in the defined range as well as the ratio haze/clarity. A test display device represented by a LED display with white LEDs was mounted directly to the article from the side of the deadfront-effect layer. The display was activated, and the visual appearance was examined. In all cases of Table 2, the display was sharply visible, without disturbing halo and/or blur, and with a white color appearance, which means without unwanted color shift.

Noticeable are the advantageously low burn-in temperatures of 650 °C. Those are remarkably low for a glass ceramic system. Such low temperatures result in a reduced energy consumption during the burn-in process and is less stressful for the substrate. For example, deforming of the substrate can be prevented.

**Table 2: Examples**

| **Sample No** | | **Ex1** | **Ex2** | **Ex3** | **Ex4** |
|---|---|---|---|---|---|
| Ceramization profile | | 590°C/6hrs | 590°C/6hrs | 590°C/6hrs | 590°C/6hrs |
| Main crystal phase | | (Fe, Mn)TiO3 | (Fe,Mn)TiO3 | (Fe,Mn)TiO3 | (Fe, Mn)TiO3 |
| Main crystal phase content | wt% | 1,7 | 1,7 | 1,7 | 1,7 |
| Residual glass phase | wt% | 98,3 | 98,3 | 98,3 | 98,3 |
| Main crystal size (from SEM images) | µm | 0,08-0,6 | 0,08-0,6 | 0,08-0,6 | 0,08-0,6 |

| Coating | | | | | |
|---|---|---|---|---|---|
| Pasting ratio (powder : organic medium) | wt% | 5,51 | 5,51 | 5,51 | 5,51 |
| Glass frit | wt% | 62,86 | 61,25 | 61,25 | 62,86 |
| Screen printing medium | wt% | 35,53 | 35,53 | 35,53 | 35,53 |
| blue pigment in paste | wt% | 1,61 | 3,22 | 3,22 | 1,61 |
| blue pigment in final enamel layer | wt% | 2,5 | 5 | 5 | 2,5 |
| D50 blue pigment | µm | 0,37 | 0,37 | 0,79 | 0,14 |
| burn-in | | 650 °C | 650°C | 650°C | 650°C |

| Properties of the article | | | | | |
|---|---|---|---|---|---|
| Layer thickness (+/- 1um) | µm | 6-8 | 6-8 | 6-8 | 6-8 |
| Optical density measured on coating side | | 0,87 | 0,9 | 0,94 | 0,89 |
| L*a*b, SCI, measured in remission (through glass substrate) - coating on buttom-side | | 33.75 / -0.36 / 1.76 | 32.09 / -1.49 / -0.11 | 35.28 / -2.08 / -0.59 | 34.6 / 0.82 / 2.66 |
| Gloss (60°), (measured on glass side) | | 95,39 | 95,13 | 94,09 | 95,5 |
| Gloss (60°) (measured on coating side) | | 55,37 | 69,53 | 49,41 | 54,52 |
| Haze measured on substrate side | | 48,6 | 49 | 75,4 | 44,6 |
| Clarity measured on substrate side | | 78,5 | 75,8 | 75,6 | 69,7 |
| Factor Haze/Clarity | | 0,62 | 0,65 | 1,00 | 0,64 |
| Transmission VIS in % measured on coating side | | 13,5 | 12,6 | 11,5 | 12,9 |
| Transmission % (coating side) @450 nm - glass side to sphere | | 2,5 | 2,4 | 2,4 | 2,6 |
| Transmission % (coating side) @700 nm - glass side to sphere | | 39,5 | 36,3 | 33,3 | 44,0 |

**Table 2: Examples (continued)**

| **Sample No** | | **Ex5** | **Ex6** | **Ex7** |
|---|---|---|---|---|
| Ceramization profile | | 590°C/6hrs | 590°C/6hrs | 525°C/6 hrs |
| Main crystal phase | | (Fe,Mn)TiO3 | (Fe, Mn)TiO3 | (Fe,Mn)TiO3; (Fe,Mn)TiO4 |
| Main crystal phase content | wt% | 1,7 | 1,7 | 5,5 |
| Residual glass phase | wt% | 98,3 | 98,3 | 94,5 |
| Main crystal size (from SEM images) | µm | 0,08-0,6 | 0,08-0,6 | 0,1-0,5 |

| Coating | | | | |
|---|---|---|---|---|
| Pasting ratio (powder : organic medium) | wt% | 5,51 | 5,51 | 5,51 |
| Glass frit | wt% | 61,25 | 61,25 | 61,25 |
| Screen printing medium | wt% | 35,53 | 35,53 | 35,53 |
| blue pigment in paste, wt% | wt% | 3,22 | 3,22 | 3,22 |
| blue pigment in final enamel layer, wt% | wt% | 5 | 5 | 5 |
| D50 blue pigment | µm | 0,14 | 1,04 | 0,37 |

| Properties of the article | | | | |
|---|---|---|---|---|
| burn-in | | 650°C | 650°C | 650°C |
| Layer thickness (+/- 1um) | µm | 6-8 | 6-8 | 6-8 |
| Optical density measured on coating side | | 0,84 | 0,81 | 2,15 |
| L*a*b, SCI, measured in remission (through glass substrate) - coating on buttom-side | | 33.68 / 0.08 1.40 | 34.05 / -0.44 / 1.06 | 28.57 / 0.16 / 0.14 |
| Gloss (60°), (measured on glass side) | | 94,85 | 96,35 | 95,45 |
| Gloss (60°) (measured on coating side) | | 40,06 | 27,26 | 22,12 |
| Haze measured on substrate side | | 51,6 | 59,3 | 91,9 |
| Clarity measured on substrate side | | 61,9 | 75,9 | 56,8 |
| Factor Haze/Clarity | | 0,83 | 0,78 | 1,62 |
| Transmission VIS in % measured on coating side | | 14,4 | 15,5 | 0,7 |
| Transmission % (coating side) @450 nm - glass side to sphere | | 2,5 | 3,1 | 0,0 |
| Transmission % (coating side) @700 nm - glass side to sphere | | 41,1 | 42,1 | 7,8 |

**Table 2: Examples (continued)**

| **Sample No** | | **Ex8** |
|---|---|---|
| Ceramization profile | | --- |
| Main crystal phase | | (Fe,Mn)TiO3; (Fe,Mn)TiO4 |
| Main crystal phase content | wt% | 4,5 (estimated) |
| Residual glass phase | wt% | 95,5 (estimated) |
| Main crystal size (from SEM images) | µm | 0,1-0,5 |

| Coating | | |
|---|---|---|
| Pasting ratio (powder : organic medium) | wt% | 5,51 |
| Glass frit | wt% | 61,25 |
| Screen printing medium | wt% | 35,53 |
| blue pigment in paste | wt% | 3,22 |
| blue pigment in final enamel layer | wt% | 5 |
| D50 blue pigment | µm | 0,79 |

| Properties of the article | | |
|---|---|---|
| burn-in | | 650°C |
| Layer thickness (+/- 1um) | µm | 6-8 |
| Optical density measured on coating side | | 2,01 |
| L*a*b, SCI, measured in remission (through glass substrate) - coating on buttom-side | | 28.49 / 0.18 / 0.17 |
| Gloss (60°), (measured on glass side) | | 96,13 |
| Gloss (60°) (measured on coating side) | | 24,84 |
| Haze measured on substrate side | | 84,6 |
| Clarity measured on substrate side | | 63,2 |
| Factor Haze/Clarity | | 1,34 |
| Transmission VIS in % measured on coating side | | 1,0 |
| Transmission % (coating side) @450 nm - glass side to sphere | | 0,0 |
| Transmission % (coating side) @700 nm - glass side to sphere | | 11,3 |

Table 3 shows comparative examples, indicated by 'Comp', with no blue pigments. A test device was prepared as described in the cases of Table 2. The test results for those examples were negative. Especially the display was not visible sharply, showed halo and/or blur and/or a disturbing color shift, mainly towards the red part of the spectrum.

Although the Ilmenite solid solution is present in the comparative examples as well, there are no blue pigments .

In the tables, the proportions of the main crystal phase and the glass phase were determined by X-ray diffraction analysis (XRD). The crystal size of the crystallites of the main crystal phase was determined by Scanning Electron microscope Zeiss Leo 1530 SEM at 20KV accelerated voltage. The crystal size range indicates the minimum and maximum values.

For most examples, the proportion of the main crystal phase and the proportion of the glass phase sum up to 100 wt.-%. This means that the main crystal phase was the only crystal phase of the glass-ceramic material. However, for Ex8 the sum of the proportions of the main crystal phase and of the glass phase was lower than 100 wt.-%. The reason is that there was an additional crystal phase whose proportion was lower than the proportion of the main crystal phase.

The crystallites of the main crystal phase were (Fe,Mn)TiO₃ for examples 1 to 6 and Fe,Mn)TiO₃ and (Fe,Mn)TiO₄ for examples 7 and 8 as determined by X-ray diffraction analysis.

The glass-ceramic material was subjected to a milling process so that a powder with a particle size d50 from about 1 to <5 µm was obtained. This powder is also referred to as glass-ceramic frit.

The glass-ceramic frit (the grounded powder described above) was used to prepare a paste for coating substrates. The as prepared paste was then used to print samples via screen-printing method.

Different substrates were coated with a paste comprising the glass-ceramic frit described above and an organic medium. The organic medium was in particular comprising or consisting of one or more glycol ethers, in particular 2-(2-butoxyethoxy)ethanol and/or 2-butoxyethanol. After coating, the coated substrates were heat-treated for obtaining an enamel coating layer.

**Table 3: Comparative examples**

| **Sample No** | | **Comp1** | **Comp2** | **Comp3** | **Comp4** |
|---|---|---|---|---|---|
| Ceramization profile | | 710°C/6hrs | 600°C/6hrs | 600°C/6hrs | 590°C/6hrs |
| Main crystal phase | | (Fe,Mn)TiO₃ | (Fe,Mn)TiO₃ | (Fe,Mn)TiO₄ | (Fe,Mn)TiO₃ |
| Main crystal phase content | wt% | 7,5 | 8 | 4,9 | 1,7 |
| Residual glass phase | wt% | 7,5 | 8 | 4,9 | 98,3 |
| Main crystal size (from SEM images) | µm | 0,14-0,19 | <0,15 (estimated) | <0,15 (estimated) | 0,08-0,6 |

| Coating | | | | | |
|---|---|---|---|---|---|
| Pasting ratio (powder : organic medium) | wt% | 5,51 | 5,51 | 5,51 | 5,51 |
| Glass frit | wt% | | | | |
| Screen printing medium | wt% | | | | |
| blue pigment in paste | wt% | | | | |
| blue pigment in final enamel layer | wt% | | | | |
| D50 blue pigment | µm | | | | |
| Screen mesh size | | 77-55T | 77-55T | 77-55T | 77-55T |
| burn-in | | 720°C | 720°C | 720°C | 650°C |

| Properties of the article | | | | | |
|---|---|---|---|---|---|
| Layer thickness (+/- 1um) | µm | 6-8 | 6-8 | 6-8 | 6-8 |
| Optical density measured on coating side | | 0,9 | 0,8 | 0,6 | 0,67 |
| L*a*b, SCI, measured in remission (through glass substrate) - coating on buttom-side | | 37,15/ 17.83 / 14.84 | 31.58 / 15.65 / 10.11 | 42.38 / 20.08 / 28.33 | 35.20 / 1.75 / 4.18 |
| Haze measured on substrate side | | 11,4 | 20,2 | 10 | 32,3 |
| Clarity measured on substrate side | | 93 | 91 | 95 | 79,8 |
| Factor Haze/Clarity | | 0,12 | 0,22 | 0,11 | 0,40 |
| Transmission VIS in % measured on coating side | | 13,2 | 15,1 | 22,9 | 21,4 |
| Transmission % (coating side) @450 nm - glass side to sphere | | | | | 5,9 |
| Transmission % (coating side) @700 nm - glass side to sphere | | | | | 55,9 |

The pasting ratio (Past. ratio) indicates the weight ratio of the glass-ceramic frit to the organic medium in the paste used for coating the substrate. The screen mesh size (scr. mesh size) indicates the mesh size of the screen used for coating the substrate with the paste.

After the heat-treatment, a layer composite comprising a substrate layer and an enamel coating layer was obtained, here the article with the deadfront-effect layer.

The optical density OD was determined by transmission densitometer model 361T manufactured by X-Rite according to ANSI PH2. 19-1986 with the enamel coating layer facing upwards.

The L* value, the a* value and the b* value of the CIELAB color space were determined using KONICA MINOLTA spectrophotometer CM-700d according to the knowledge of the skilled person with the enamel coating layer facing downwards.

The gloss at 60° was determined by RHOPOINT glossmeter according to the known methods. The gloss is indicated in "gloss units" (GU). The measurement was performed as described above.

The results show that a durable coating with good opacity was obtained.

The invention and the examples are further explained by the Figures. The embodiments depicted in the Figures represent examples themselves. Wherever appropriate, the Figures are schematic.
Figure 1 shows the XRD diagram of the glass-ceramic material
Figure 2 shows the spectral transmission curve of embodiments
Figure 3a shows the sectional view through an article with deadfront-effect layer
Figure 3b shows the top view of the article as in Figure 5a
Figure 4a shows the deadfront-effect of a comparative example
Figure 4b shows the deadfront-effect of articles according to the invention

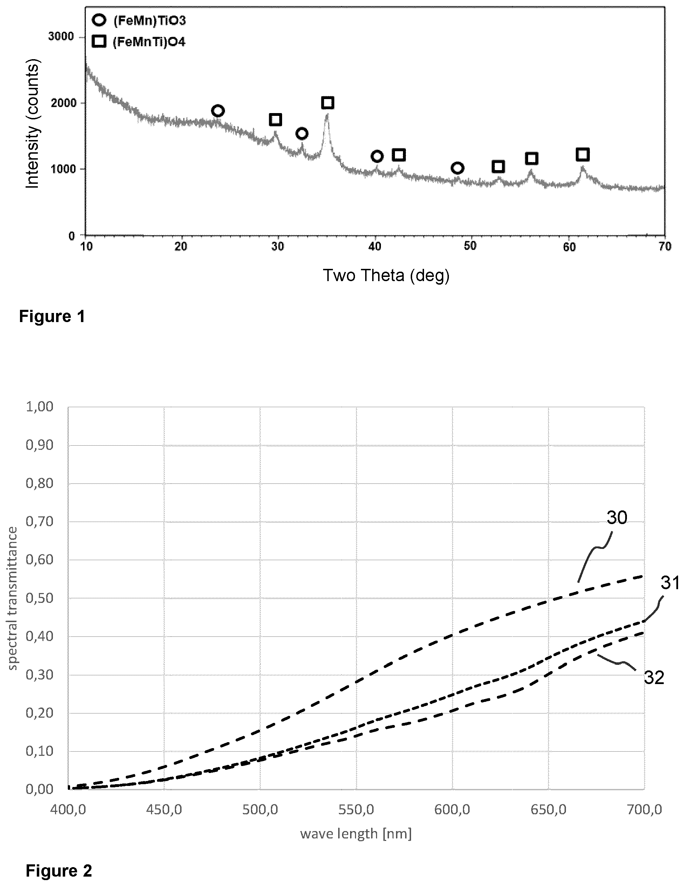

The presence of the referring Ilmenite and/or Ilmenite solid-solutions phase has been investigated via XRD measurements. Figure 1 shows the referring XRD diagram for a probe containing Fe, Ti and Mn in the described ranges which has been ceramized at 600°Cfor 6 hours. The presence of a (FeMn)TiO₃ and (FeMn)TiOa containing solid solution is evident due to the referring XRD peaks.

Figure 2 shows the spectral transmission curve of examples (31, 32) taken from Table 2 in the visible range of the spectrum as well of as a comparative example (30). The curve (31) refers to Ex4 and the curve (32) to Ex5 from Table 2. The curve (30) refers to Comp4 from Table 3. As can be seen, the spectral transmission of the comparative example is higher than those according to the invention. The lower transmission of the inventive examples provides or at least contributes to the improved deadfront-effect, especially because installations attached behind the article can be disguised from the viewer when the installation is deactivated, especially does not emit light. At 750 nm, the transmission curve of the examples according to the invention have a transmission below 50%, which is an advantageous value. The display mounted behind the deadfront-effect layer appears to be white because of the lower transmission in the red part of the spectrum, whereas in the comparative example according to curve (30), the display has a brownish appearance.

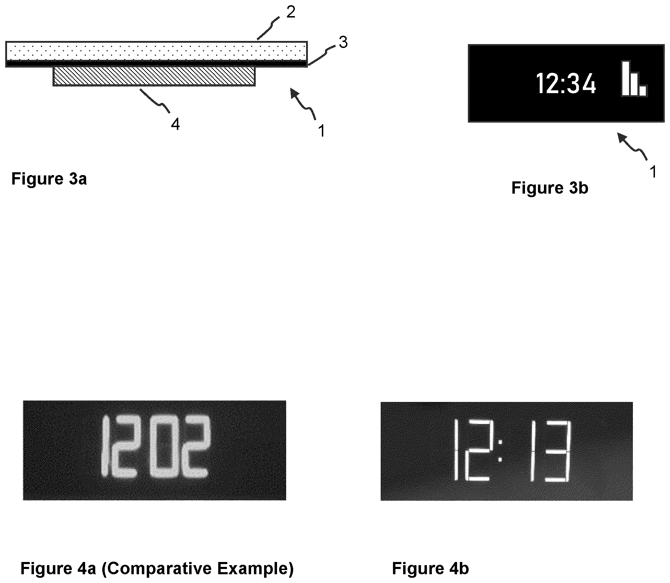

Figure 3a illustrates a scheme of an article (1) having a deadfront-effect layer (3) attached to a substrate (2) and a display device (4) arranged thereunder, namely under the deadfront-effect layer (3). If the display device (4) is activated, it emits light through the deadfront-effect layer (3) and the substrate. Which in other words means, that a viewer watches the article (1) from the side of the substrate (2).

Figure 3b represents the top view of an article (1) following the principle of Figure 4a for a viewer. In this Figure, the display device (4) is activated. The viewer can see the display, in this case in general an alphanumerical display and/or symbols. Of course, every type of display is possible, including light dots, simple pictograms, symbols, numbers, characters, pixel matrix and so on.

If the display device (4) is deactivated, the shown surface of the article would be a deep black, color neutral, homogeneous surface.

Figure 4a is a photographic image of an article (1) with a conventional deadfront-effect article (1). As can be seen, the numbers displayed are blurred when the display is activated. This example corresponds to an article (1) with a deadfront-effect layer (3) according to the comparative example Comp4 from Table 3. This comparative sample has a haze value of 32.2 and a clarity of 79.8. resulting to a ratio haze/clarity of 0.4. According to the invention, advantageously the minimum value of this ratio is 0.50. It is impressive, that although a high clarity is provided by this comparative example, the viewer's impression is nevertheless a blurred display. As well, there is no blue pigment present and the color coordinates show a b* value of 4.18, which is in a non-desired range and a spectral transmission which leads to an appearance with a color shift,

Figure 4b is a photographic image of an article (1) with a deadfront-effect article (1) according to the invention. As can be seen, the numbers displayed are brilliant and sharp. This example corresponds to Ex5 in Table 2 with a haze value of 51.6 and a clarity of 61.9. resulting to a ratio haze/clarity of 0.8. This supports the description provided above, that haze and clarity need to be coordinated within the stated range of the ratio haze/clarity in order to provide an advantageous improved deadfront-effect. Blue color pigments are present and the color coordinates are in a neutral range and/or reduce the transmission in the red part of the spectrum.

The invention provides the advantage, that an article (1) with an improved deadfront-effect is enabled. Such article (1) allows a clear and sharp viewer impression of a display activated behind the substrate (2), which has a deep black appearance and effectively disguises the display device (4) when it is deactivated. Because the deadfront-effect layer (3) is present in form of a glass-ceramic material and/or a glass frit, it can be applied by normal burning-in processes and therefore can be applied to a large variety of applications, especially for household appliances such as cooktops and/or vehicle applications, such as interior surfaces and/or windscreens.

## Claims

1. An article (1) with improved deadfront-effect, comprising a preferably transparent substrate (2) and a deadfront-effect layer (3) being attached to the substrate, the deadfront-effect layer (3) comprising a glass-ceramic material comprising or consisting of a glass phase and a crystalline phase, wherein the crystalline phase comprises a main crystal phase, wherein the main crystal phase comprises an Ilmenite solid solution with crystallites of the idealized formula Fe₁₋ₓMₓTiO₃ or of formula (Fe₁₋ₓ,Mₓ)₂TiO₄ or (Fe₁₋ₓ,Mₓ)Ti₂O₅, wherein M is selected from the group consisting of Mn, Mg, Ni, Co, Zn, Cu, Cr and combinations of two or more thereof, wherein x is in a range of from 0 to 0.80, wherein the deadfront-effect layer (3) comprises a blue color pigment which; preferably the deadfront-effect layer (3) is an enamel coating layer.

2. The article (1) according to claim 1, wherein the proportion of the glass phase is at least 70.0 wt.-% and the proportion of the crystalline is at least 0.1 wt.-% as compared to the total weight of the glass-ceramic material; preferably the main crystal phase has a proportion of more than 50 wt.-% as compared to the total weight of the crystalline phase.

3. The article (1) according to at least one of the preceding claims, wherein the blue color pigment has the following L*a*b* color coordinates in CIELAB color space:
L is in a range of from 28 to 40, a* is in a range of from -6.0 to 9.0 and b* in a range of from -10.0 to -45.0;
preferably the following set of parameters is present: L is in a range of from 28.0 to 40.0, a* is in a range of from 1.0 to 9.0 and b* in a range of from -30.0 to -45.0
or the following set of parameters is present: L is in a range of from 28.0 to 40.0, a* is in a range of from -6.0 to 0.0 and b* in a range of from -15.0 to -21.0.

4. The article (1) according to at least one of the preceding claims, wherein the blue color pigment contains Co and/or MN; preferably the blue color pigment is selected from the group consisting of (Co)Al₂O₄ and/or Co(Al,Cr)₂O₃ and/or CoSnO₃ and/or YIn_{1-y}Mn_{y}O₃ including any combinations thereof.

5. The article (1) according to at least one of the preceding claims, wherein the deadfront-effect layer comprises at least one further red color pigment and/or green color pigment and/or yellow color pigment.

6. The article (1) according to at least one of the preceding claims, wherein the color pigments are present in the glass-ceramic material of the deadfront-effect layer in a range from 0.1 wt.-% to 15 wt.-%, preferably from 1.5 wt.-% to 10 wt.-%, and/or the Ilmenite solid solution of the main crystal phase is present in a range from 0.5 wt% to 10 wt%.

7. The article (1) according to at least one of the preceding claims, wherein the color pigments have a size d50 in the range from 0.1 µm to 1.2 µm and/or wherein the crystallites of the main crystalline phase have a main crystal size in the range from 0.05 µm to 0.8 µm.

8. The article (1) according to claim 1, wherein the difference of the spectral transmission at 700 nm and 450 nm is <50% or in the range from 1% to <50% and/or wherein the overall transmission is in the range from 0.5% to 20% and/or the optical density is ≥0.7, preferably the range from ≥0.7 to <2.5 for light having a wavelength of 400 - 750 nm when measured at a reference thickness of the deadfront-effect layer (3) of 7 µm.

9. The article (1) according to at least one of the preceding claims, with the following L*a*b* color coordinates in CIELAB color space: L* is in a range of from 20.0 to 60.0, a* is in a range of from -4.0 to 10.0 and b* is in a range of from -3.0 to 4.0 when measured at a reference thickness of the deadfront-effect layer of 7 µm and when measured in remission.

10. The article (1) according to at least one of the preceding claims with at least one of the following properties when measured at a reference thickness of the deadfront-effect layer (3) of 7 µm:
clarity from 50% to 97%, and/or
haze from 40% to 94%, and/or
ratio haze / clarity > 0.5, and/or
optical density OD from ≥0.7 to <2.5.

11. The article (1) according to at least one of the preceding claims, wherein the deadfront-effect layer (3) has a thickness from 1.0 µm to 30.0 µm.

12. The article (1) according to at least one of the preceding claims, wherein the deadfront-effect layer (3) is a screen-printed layer.

13. The article (1) according to at least one of the preceding claims, wherein the substrate (2) consists, at least in the area of the deadfront-effect layer (3), of a glass or glass ceramic material or a polymer.

14. The article (1) according to at least one of the preceding claims, wherein in the crystallites of the Ilmenite solid solution M is Mn or Mg or combinations thereof.

15. A method for producing the article (1) of at least one of claims 1 to 10, the method comprising the following steps:
a) Providing a starting glass,
b) Ceramming the starting glass by thermal treatment at a temperature of from 500°C to 1000°C preferably for a duration of from 1 hour to 12 hours,
c) Coating a substrate with a paste comprising the glass-ceramic material and the blue pigment or a glass-ceramic frit containing the glass-ceramic material and the blue pigment of at least one of the preceding claims, wherein the paste further comprises an organic medium,
d) Heat treating the coated substrate at a temperature of from 400°C to 1000°C preferably for a duration of from 0.2 to 12 hours.

16. Use of the article (1) of at least one of claims 1 to 13 in a household device, especially a cooktop and/or an oven and/or a cooker hood and/or a hob top and/or a refrigerator and/or a refrigerator door, a display device, a device in the interior of a vehicle, especially an automobile or an airplane or a train, or for the decoration of a windscreen.
